# EUROPÄISCHE PATENTSCHRIFT

(11) **EP 1 740 624 B1**
(45) Veröffentlichungstag und Bekanntmachung des Hinweises auf die Patenterteilung: **05.09.2007**
(21) Anmeldenummer: 05739403.3
(22) Anmeldetag: 14.04.2005
(51) Int. Cl.: C08F 26/10, C08F 2/20

(54) **VERFAHREN ZUR HERSTELLUNG EINER WASSER-IN-WASSER-DISPERSION VON POLYVINYLLACTAM MIT EINEM K-WERT VON >= 120**
METHOD FOR PRODUCING A WATER-IN-WATER POLYVINYL LACTAM DISPERSION WITH A K VALUE OF >= 120
PROCÉDÉ DE PRODUCTION D'UNE DISPERSION EAU DANS EAU DE POLYVINYLLACTAME AYANT UNE VALEUR K >=120

(30) Priorität: 16.04.2004 DE 102004019179
(43) Veröffentlichungstag der Anmeldung: 10.01.2007
(73) Patentinhaber: BASF Aktiengesellschaft, 67056 Ludwigshafen (DE)
(72) Erfinder: CHRISSTOFFELS, Lysander, 67117 Limburgerhof (DE); WIDMAIER, Ralf, 68167 Mannheim (DE); GARCIA CASTRO, Ivette, 67067 Ludwigshafen (DE); WEGMANN, Ludger, 67063 Ludwigshafen (DE)
(86) Internationale Anmeldenummer: PCT/EP2005/003915
(87) Internationale Veröffentlichungsnummer: WO 2005/100415

(56) Entgegenhaltungen:
- WO-A-91/15522
- WO-A-94/22953
- WO-A-98/14405
- DE-A1- 4 342 281
- US-A- 5 306 795
- US-A- 5 373 074

## Beschreibung

Gegenstand der vorliegenden Erfindung ist ein Verfahren zur Herstellung einer Wasser-in-Wasser-Dispersion von Polyvinyllactam mit einem K-Wert von ≥ 120 durch radikalisch initiierte Polymerisation wenigstens eines N-Vinyllactams der allgemeinen Formel I 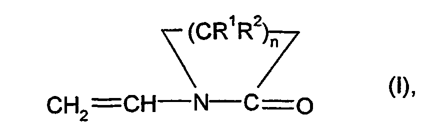 mit
- R¹, R²: unabhängig voneinander Wasserstoff und/oder C₁-C₈-Alkyl,
- n: gleich einer ganzen Zahl von 2 bis 8,
in einem wässrigen Reaktionsmedium,
welches dadurch gekennzeichnet ist, dass das zur Polymerisation eingesetzte wenigstens eine N-Vinyllactam I zu wenigstens 50 Gew.-% aus N-Vinyl-2-pyrrolidon (R¹ und R² gleich Wasserstoff, n gleich 3) besteht, die Polymerisationstemperatur ≤ 70 °C beträgt und die radikalisch initiierte Polymerisation des wenigstens einen N-Vinyllactams I in Gegenwart von
a) 1 bis 100 Gew.-% der Sättigungsmenge im wässrigen Reaktionsmedium wenigstens eines organischen oder anorganischen Salzes,
b) 0,1 bis 30 Gew.-% wenigstens eines polymeren anionischen Dispergiermittels, bezogen auf die Gesamtmenge des zur Polymerisation eingesetzten wenigstens einen N-Vinyllactams I, sowie
c) 0,01 bis 0,25 Gew.-% wenigstens eines Radikalinitiators, bezogen auf die Gesamtmenge des zur Polymerisation eingesetzten wenigstens einen N-Vinyllactams I
erfolgt, und dabei die Reaktionsbedingungen so gewählt werden, dass während der Polymerisationsreaktion wenigstens eine Teilmenge des wenigstens einen N-Vinyllactams I und des daraus durch Polymerisation gebildeten Polyvinyllactams im wässrigen Reaktionsmedium als separate Phase vorliegen.

Für die Herstellung von hochmolekularen Polyvinyllactam-Verbindungen, insbesondere Poly-N-vinyl-2-pyrrolidon (PVP) ist von folgendem Stand der Technik auszugehen.

So offenbart die WO 91/15522 die Herstellung von wasserlöslichem PVP mit K-Werten > 120 durch radikalische wässrige Lösungspolymerisation von N-Vinyl-2-pyrrolidon (VP). Kennzeichnend für das Verfahren ist, dass im Laufe der VP-Polymerisation Wasser zugegeben wird, damit die Viskosität der erhaltenen PVP-Lösung nicht zu stark ansteigt.

In der Schrift WO 91/03496 wird die Lösungspolymerisation mittels tert.-Amylperoxypivalat als Radikalstarter offenbart. Neben Copolymeren aus Maleinsäureanhydrid und Alkylvinylethern wird auch die Herstellung von PVP mit einem K-Wert von ca. 120 beschrieben. Der PVP-Gehalt der beispielhaft offenbarten hochviskosen wässrigen Lösung beträgt ca. 21 Gew.-%.

Die WO 94/18241 offenbart die Herstellung von PVP mit K-Werten im Bereich von 30 bis 150 in Form von hochviskosen wässrigen Lösungen durch VP-Polymerisation unter Verwendung eines speziellen Radikalstartersystems, bestehend aus wenigstens zwei Radikalstartern, deren 10-Stundenhalbwertszeittemperaturen sich um mehr als 5 °C unterscheiden. Es findet sich jedoch nur ein Beispiel für die Herstellung von PVP mit einem K-Wert > 100. Allerdings liegt der PVP-Gehalt dieser wässrigen PVP-Lösung lediglich bei ca. 19 Gew.-%.

Gegenstand der WO 94/22953 ist die Herstellung von PVP mit einem K-Wert von 15 bis 130 in Form von wässrigen Lösungen durch radikalische Polymerisation von VP oder dessen Oligomeren unter Verwendung des Radikalstarters 2,2'-Azobis(2-methylbutannitril). Die mit K-Werten von ≥ 120 erhaltenen wässrigen PVP-Lösungen weisen jedoch nur PVP-Gehalte von ca. 20 Gew.-% auf.

Nachteilig an diesen Verfahren ist, dass die Herstellung dieser hochmolekularen PVP-Polymerisate mittels Lösungspolymerisation bereits bei relativ niedrigen PVP-Gehalten zu hohen Viskositäten der PVP-Lösungen führt. Aufgrund der resultierenden schlechten Raum-Zeit-Ausbeuten ergeben sich hohe Produktionskosten. Als weiterer Nachteil der Verfahren des Standes der Technik sind die relativ hohen Anteile an ungelösten Gelpartikeln anzusehen, welche zu einer Vielzahl von Nachteilen sowohl im Produktionsprozeß (längere Filtrations- und Abfüllzeiten) wie auch bei der späteren Anwendung der PVP-Polymeren (Inhomogenitäten der entsprechenden Formulierungen) führen.

Aufgabe der vorliegenden Erfindung war es, ein verbessertes Polymerisationsverfahren für hochmolekulare N-Vinyllactame mit einem K-Wert ≥ 120, insbesondere N-Vinyl-2-pyrrolidon, zur Verfügung zu stellen, welches verbesserte Raum-Zeit-Ausbeuten aufweist und niedrigviskose wässrige Systeme mit höheren Polyvinyllactamgehalten bei gleichzeitig niedrigeren Gelgehalten zugänglich macht.

Dementsprechend wurde das eingangs definierte Verfahren gefunden.

Verfahren zur Herstellung von Wasser-in-Wasser-Polymerisatdispersionen durch radikalisch induzierte Polymerisation ethylenisch ungesättigter Verbindungen (Monomere) sind allgemein bekannt (siehe hierzu beispielsweise WO 98/31748, WO 98/54234, EP-A 630909, EP-A 984990 oder US-A 4380600).

Erfindungsgemäß wird wenigstens ein N-Vinyllactam der allgemeinen Formel I 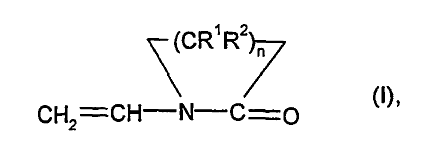 mit
- R¹, R²: unabhängig voneinander Wasserstoff und/oder C₁-C₈-Alkyl,
- n: gleich einer ganzen Zahl von 2 bis 8,

in einem wässrigen Reaktionsmedium zur Polymerisation eingesetzt, wobei das wenigstens eine N-Vinyllactam I zu wenigstens 50 Gew.-% aus N-Vinyl-2-pyrrolidon (R¹ und R² gleich Wasserstoff, n gleich 3) besteht.

Dabei können R¹ und R² unabhängig voneinander Wasserstoff und/oder C₁-C₈-Alkyl, beispielsweise Methyl, Ethyl, n-Propyl, iso-Propyl, n-Butyl, iso-Butyl, tert.-Butyl sowie n-Pentyl, n-Hexyl, n-Hepfyl oder n-Octyl und deren isomeren Alkylgruppen sein. Als R¹ und R² bevorzugt sind Wasserstoff und Methyl. Insbesondere bevorzugt ist Wasserstoff. Häufig enthält das N-Vinyllactam I keine oder insgesamt lediglich eine Methylgruppe.

Erfindungsgemäß steht n für eine ganze Zahl von 2 bis 8, häufig für 3, 4, 5, 6 und 7. Insbesondere steht n für 3 und 5.

Beispiele für erfindungsgemäß vorteilhaft einsetzbare N-Vinyllactame I sind die N-Vinylderivate nachfolgender Lactame: 2-Pyrrolidon, 2-Piperidon, ε-Caprolactam und deren Alkylderivate, wie beispielsweise 3-Methyl-2-pyrrolidon, 4-Methyl-2-pyrrolidon, 5-Methyl-2-pyrrolidon, 3-Ethyl-2-pyrrolidon, 3-Propyl-2-pyrrolidon, 3-Butyl-2-pyrrolidon, 3,3-Dimethyl-2-pyrrolidon, 3,5-Dimethyl-2-pyrrolidon, 5,5-Dimethyl-2-pyrrolidon, 3,3,5-Trimethyl-2-pyrrolidon, 5-Methyl-5-ethyl-2-pyrrolidon, 3,4,5-Trimethyl-2-pyrrolidon, 3-Methyl-2-piperidon, 4-Methyl-2-piperidon, 5-Methyl-2-piperidon, 6-Methyl-2-piperidon, 6-Ethyl-2-piperidon, 3,5-Dimethyl-2-piperidon, 4,4-Dimethyl-2-piperidon, 3-Methyl-ε-caprolactam, 4-Methyl-ε-caprolactam, 5-Methyl-ε-caprolactam, 6-Methyl-ε-caprolactam, 7-Methyl-ε-caprolactam, 3-Ethyl-ε-caprolactam, 3-Propyl-ε-caprolactam, 3-Butyl-ε-caprolactam, 3,3-Dimethyl-ε-caprolactam oder 7,7-Dimethyl-ε-caprolactam. Selbstverständlich können auch Gemische vorgenannter N-Vinyllactame I eingesetzt werden.

Das zu polymerisierende wenigstens eine N-Vinyllactam I besteht zu wenigstens 50 Gew.-% aus VP. Oft besteht das wenigstens eine N-Vinyllactam I zu ≥ 60 Gew.-%, ≥ 70 Gew.-%, ≥ 80 Gew.-%, ≥ 90 Gew.-% oder sogar zu 100 Gew.-% und alle Werte dazwischen aus VP. Häufig wird ausschließlich VP zur Polymerisation eingesetzt.

Erfindungsgemäß kann die Gesamtmenge an N-Vinyllactam I im Reaktionsmedium vorgelegt werden. Es ist aber auch möglich, gegebenenfalls lediglich eine Teilmenge des wenigstens einen N-Vinyllactams I im Reaktionsmedium vorzulegen und die gegebenenfalls verbliebene Restmenge bzw. die Gesamtmenge des N-Vinyllactams I dem Reaktionsmedium unter Polymerisationsbedingungen zuzuführen.

Das erfindungsgemäße Verfahren wird in Gegenwart von 1 bis 100 Gew.-% der Sättigungsmenge im wässrigen Reaktionsmedium wenigstens eines organischen oder anorganischen Salzes durchgeführt. Dabei hat das wenigstens eine Salz die Funktion, dass die Löslichkeit sowohl von N-Vinyllactam I als auch vom gebildeten Polyvinyllactam herabgesetzt wird und so wenigstens eine Teilmenge des zur Polymerisation eingesetzten N-Vinyllactams I und des daraus durch Polymerisation gebildeten Polyvinyllactams im wässrigen Reaktionsmedium unter Polymerisationsbedingungen als separate heterogene Phase vorliegen.

Die Auswahl des entsprechenden Salzes hängt im wesentlichen von dem eingesetzten N-Vinyllactam I, dem zu erzeugenden Polyvinyllactam und dem eingesetzten polymeren anionischen Dispergiermittel, sowie ggf. weiterer Hilfsmittel ab. Die Auswahl von Art und Menge des Salzes erfolgt dergestalt, dass unter Polymerisationsbedingungen (Temperatur, Druck, ggf. in Anwesenheit von Hilfsstoffen etc.) sowohl wenigstens eine Teilmenge des zur Polymerisation eingesetzten N-Vinyllactams I wie auch wenigstens eine Teilmenge des gebildeten Polyvinyllactams in der Salzlösung als separate heterogene Phase vorliegen. Erfindungsgemäß vorteilhaft ist es, je höher der als separate Phase vorliegende Anteil an N-Vinyllactam I und Polyvinyllactam ist. Günstig ist es, wenn unter Polymerisationsbedingungen ≥ 60 Gew.-%, häufig ≥ 70 Gew.-% und oft ≥ 80 Gew.-% des wenigstens einen nichtumgesetzten N-Vinyllactams I sowie ≥ 70 Gew.-%, häufig ≥ 80 Gew.-% und oft ≥ 90 Gew.-% des gebildeten Polyvinyllactams im wässrigen Reaktionsmedium als separate heterogene Phase vorliegen.

Die einzusetzenden Salze, die für das erfindungsgemäße Verfahren verwendet werden können, sind ausführlich in den Schriften WO 98/14405 und WO 00/20470 beschrieben, auf die hiermit ausdrücklich Bezug genommen wird.

Geeignete Salze sind anorganische Salze, bevorzugt kosmotropische Salze, wie Fluoride, Chloride, Sulfate, Phosphate oder Hydrogenphosphate von Metallionen oder Ammoniumionen. Typische Vertreter sind Natriumsulfat, Kaliumsulfat, Ammoniumsulfat, Magnesiumsulfat, Aluminiumsulfat, Natriumchlorid, Kalziumchlorid, Natriumdihydrogenphosphat, Diammomiumhydrogenphosphat, Dikaliumhydrogenphosphat, Kalziumphosphat, Natriumcitrat und Eisensulfat.

Chaotrope Salze, wie beispielsweise Thiocyanate, Perchlorate, Chlorate, Nitrate, Bromide und Iodide können ebenfalls verwendet werden. Typische Vertreter sind Kalziumnitrat, Natriumnitrat, Ammoniumnitrat, Aluminiumnitrat, Natriumthiocyanat und Natriumiodid.

Vorteilhaft werden Salze organischer C₁- bis C₁₅-Carbonsäuren, insbesondere die Alkalisalze, beispielsweise Natrium- oder Kaliumsalze oder Ammoniumsalze ein-, zwei- oder mehrbasiger organischer C₁- bis C₁₂-Carbonsäuren, wie beispielsweise Ameisensäure, Essigsäure, Zitronensäure, Oxalsäure, Malonsäure, Bernsteinsäure, Adipinsäure, Korksäure, Phthalsäure, Agaricinsäure, Trimesinsäure, 1,2,3-Propantricarbonsäure sowie 1,4-, 2,3- oder 2,6-Naphthalindicarbonsäure eingesetzt.

Die vorgenannten Salze können einzeln oder als Mischungen von zwei oder mehr Salzen eingesetzt werden. Oftmals ist eine Mischung mehrerer Salze wirksamer als ein Salz allein, bezogen auf die eingesetzte Menge.

Die Salze werden in einer Menge zugesetzt, die 1 bis 100 Gew.-%, bevorzugt 10 bis 90 Gew.-% und besonders bevorzugt 15 bis 75 Gew.-% der Sättigungsmenge im wässrigen Reaktionsmedium unter Reaktionsbedingungen beträgt.

Unter 100 Gew.-% Sättigungsmenge im Reaktionsmedium ist diejenige Menge an Salz oder Salzen zu verstehen, die sich im wässrigen Reaktionsmedium des eingesetzten N-Vinyllactams I in Anwesenheit des wenigstens einen polymeren anionischen Dispergiermittels sowie ggf. weiteren Hilfsstoffen bei der verwendeten Reaktionstemperatur gerade noch lösen ohne zu präzipitieren.

Erfindungsgemäß kann die Gesamtmenge des wenigstens einen Salzes im Reaktionsmedium vorgelegt werden. Es ist aber auch möglich, gegebenenfalls lediglich eine Teilmenge des wenigstens einen Salzes im Reaktionsmedium vorzulegen und die gegebenenfalls verbliebene Restmenge bzw. die Gesamtmenge des wenigstens einen Salzes dem Reaktionsmedium unter Polymerisationsbedingungen zuzuführen. Dabei ist allerdings darauf zu achten, dass sowohl das zur Polymerisation eingesetzte N-Vinyllactam I (bis zu dessen Abreaktion) wie auch das gebildete Polyvinyllactam unter Reaktionsbedingungen im wässrigen Reaktionsmedium stets als separate heterogene Phase vorliegen.

Das erfindungsgemäße Verfahren erfolgt in Gegenwart von 0,1 bis 30 Gew.-%, oft von 0,5 bis 20 Gew.-% und häufig von 1 bis 10 Gew.-% wenigstens eines polymeren anionischen Dispergiermittels, jeweils bezogen auf die Gesamtmenge des zur Polymerisation eingesetzten wenigstens einen N-Vinyllactams I.

Unter einem polymeren anionischen Dispergiermittel sollen im Rahmen dieser Schrift alle polymeren Verbindungen verstanden werden, deren mittleres Molekulargewicht > 1000 g/mol beträgt und deren dispergierend wirkendes Polymergerüst anionische Gruppen trägt. Häufig beträgt das mittlere Molekulargewicht 1500 bis 3000000 g/mol oder 10000 bis 2000000 g/mol und oft 30000 bis 1500000, jeweils bestimmt mittels üblicher Verfahren der Gelpermeationschromatographie.

Dabei kommen als polymere anionische Dispergiermittel insbesondere Homo- und Copolymerisate folgender Monomerer in Betracht: Acrylsäure, Methacrylsäure, Crotonsäure, Ethylacrylsäure, Itakonsäure, 2-Acrylamido-2-methylpropansulfonsäure, Vinylsulfonsäure, Vinylschwefelsäure, Vinylphosphorsäure, 10-Undecensäure, 4-Pentensäure, Zimtsäure, Maleinsäure, Maleinsäureanhydrid, Fumarsäure, 3-Butensäure, 5-Hexensäure, 6-Heptensäure, 7-Octensäure, Citraconsäure, Mesaconsäure, Styrolsulfonsäure, Styrolschwefelsäure, Acrylsäure-(3-sulfopropyl)-ester, Itakonsäure-bis-(3-sulfopropyl)-ester, Methacrylsäure-(3-sulfopropyl)-ester, 3-Allyloxy-2-hydroxypropan-1-sulfonsäure, 2-Acrylamido-2-methylethan-sulfonsäure, Acrylsäure-(2-sulfoethyl)ester, Itakonsäure-bis-(2-sulfoethyl)-ester, Methacrylsäure-(2-sulfoethyl)-ester, Methacrylsäure-(3-sulfopropyl)-ester, 3-Allyloxy-2-hydroxypropan-1-sulfonsäure, 3-Allyloxy-2-hydroxyethan-1-sulfonsäure sowie deren Alkali- und Ammoniumsalze, insbesondere deren Natrium- und Kaliumsalze.

Neben den vorgenannten säuregruppenhaltigen Monomeren können die polymeren anionischen Dispergiermittel in Form ihrer Copolymerisate auch noch folgende neutrale Monomere in einpolymerisierter Form enthalten: Ethylen, Isobuten, vinylaromatische Monomere, wie Styrol, α-Methylstyrol, o-Chlorstyrol oder Vinyltoluole, Vinylhalogenide, wie Vinylchlorid oder Vinylidenchlorid, Ether aus Vinylalkohol und 1 bis 18 C-Atome aufweisende Monoalkoholen, wie beispielsweise Methylvinylether, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie C₄₋₈-konjugierte Diene, wie 1,3-Butadien (Butadien) und Isopren. Neben oder anstelle der vorgenannten Monomeren können auch noch N-Vinylformamid, N-Vinylacetamid, VP, N-Vinylimidazol, N-Vinylcaprolactam, 2-Vinylpyridin, 4-Vinylpyridin oder 2-Methyl-5-vinylpyridin zur Herstellung des polymeren anionischen Dispergiermittels eingesetzt werden. Auch ist es möglich, die möglicherweise im polymeren anionischen Dispergiermittel enthaltenen Formamid- oder Acetamidgruppen zu hydrolysieren, wobei primäre Aminogruppen entstehen. Die vorgenannten Monomere bilden in der Regel in den anionischen Dispergiermitteln die Hilfsmonomeren, die, bezogen auf die Gesamtmonomerenmenge, einen Anteil von weniger als 80 Gew.-%, häufig weniger als 50 Gew.-% und bevorzugt weniger als 30 Gew.-% auf sich vereinen. Häufig enthalten die polymeren anionischen Dispergiermittel keine der vorgenannten Monomeren in einpolymerisierter Form.

Selbstverständlich ist es auch möglich, dass die polymeren anionischen Dispergiermittel sowohl Sulfonsäure- und/oder Carbonsäuregruppen, wie auch am Stickstoff protonierte und/oder alkylierte Gruppen enthalten. Dabei ist es jedoch wesentlich, dass die Dispergiermittel mehr Sulfonsäure- und/oder Carbonsäuregruppen als am Stickstoff protonierte und/oder alkylierte Gruppen aufweisen.

Als Hilfsmonomere kommen dabei folgende am Stickstoff protonierte oder alkylierte Monomere in Betracht: 1-Vinylimidazol, 2-Vinylimidazol, 2-Vinylpyridin, 4-Vinylpyridin, 2-Methyl-5-methylpyridin, Dialkylaminoalkylacrylate, Dialkylaminoalkylmethacrylate, Dialkylaminoalkylacrylamide, Dialkylaminoalkylmethacrylamide, 3-Aminopropylvinylether, Vinylamine oder Allylamine. Die Alkylierung erfolgt durch dem Fachmann bekannte Verfahren, beispielsweise durch Reaktion mit Dimethylsulfat, Diethylsulfat oder Methylchlorid. Selbstverständlich ist es auch möglich, die Alkylierung mittels vorgenannter Reagenzien auf der Stufe des Polymers durchzuführen.

Die K-Werte der eingesetzten polymeren anionischen Dispergiermittel liegen in der Regel in einem Bereich von 10 bis 350, häufig von 20 bis 200 und oft von 35 bis 150.

Als K-Werte sollen im Rahmen dieser Schrift generell die nach Fikentscher, Cellulosechemie, Bd. 13, Seiten 58 bis 64 (1932) bei 25 °C in 5 gew.-%iger wässriger Kochsalzlösung gemessenen Werte verstanden werden. Die Konzentration des zu messenden Polymeren (polymeres anionisches Dispergiermittel oder Polyvinyllactam) in vorgenannter Kochsalzlösung beträgt dabei jeweils 0,1 Gew.-Teile [g] pro 100 Volumenteilen [ml] 5 gew.-%iger wässriger Kochsalzlösung.

Von Bedeutung ist, dass die polymeren anionischen Dispergiermittel unter Reaktionsbedingungen im tatsächlich eingesetzten Mengenbereich von 0,1 bis 30 Gew.-%, bezogen auf die Gesamtmenge des zur Polymerisation eingesetzten wenigstens einen N-Vinyllactams I, vollständig im wässrigen Reaktionsmedium löslich sind und dabei die als dispers separate Phase vorliegenden N-Vinyllactam- und insbesondere die gebildeten Polyvinyllactamtröpfchen zu stabilisieren vermögen.

Von Bedeutung ist ferner, dass die polymeren anionischen Dispergiermittel optional auch in Kombination mit dem Fachmann geläufigen sogenannten neutralen Schutzkolloiden, wie beispielsweise Polyvinylalkohole, Poly-N-vinyl-2-pyrrolidon, Polyalkylenglykole, sowie Cellulose-, Stärke- oder Gelatinederivaten, eingesetzt werden können. Dabei ist allerdings der Gewichtsanteil an optional eingesetzten neutralen Schutzkolloiden in der Regel geringer als der Gewichtsanteil an polymeren anionischen Dispergiermitteln und beträgt oft ≤ 5 Gew.-%, ≤ 3 Gew.-% oder ≤ 1 Gew.-%, jeweils bezogen auf die Gesamtmenge des zur Polymerisation eingesetzten wenigstens einen N-Vinyllactams I.

Erfindungsgemäß kann die Gesamtmenge des wenigstens einen polymeren anionischen Dispergiermittels ggf. in Kombination mit den neutralen Schutzkolloiden im Reaktionsmedium vorgelegt werden. Es ist aber auch möglich, gegebenenfalls lediglich eine Teilmenge des wenigstens einen polymeren anionischen Dispergiermittels ggf. in Kombination mit den neutralen Schutzkolloiden im Reaktionsmedium vorzulegen und die gegebenenfalls verbliebene Restmenge bzw. die Gesamtmenge des wenigstens einen polymeren anionischen Dispergiermittels ggf. in Kombination mit den neutralen Schutzkolloiden dem Reaktionsmedium unter Polymerisationsbedingungen zuzuführen.

Als Initiatoren für die radikalische Polymerisation können dem Fachmann geläufige wasserlösliche und wasserunlösliche Peroxo- und/oder Azo-Verbindungen eingesetzt werden, wie beispielsweise Alkali- oder Ammoniumperoxodisulfate,-Wasserstoffperoxid, Dibenzoylperoxid, tert.-Butylperpivalat, 2,2'-Azobis-(2,4-dimethylvaleronitril), tert.-Butylperoxineodecanoat, tert.-Butylper-2-ethylhexanoat, Di-tert.-butylperoxid, tert.-Butylhydroperoxid, Azo-bis-isobutyronitril, Azo-bis-(2-amidinopropan)dihydrochlorid, 2,2'-Azo-bis-(2-methylpropionamidin)dihydrochlorid (V-50 der Fa. Wako Chemicals GmbH, Neuss) oder 2,2'-Azo-bis-(2-methylbutyronitril). Geeignet sind auch Radikalinitiatormischungen oder Redoxinitiatoren, wie z.B. Ascorbinsäure/Eisen(II)sulfat/Natriumperoxodisulfat, tert.-Butylhydroperoxid/Natriumdisulfit, tert.-Butylhydroperoxid/Natriumhydroxymethansulfonat. Die Menge des wenigstens einen Radikalinitiators beträgt 0,01 bis 0,25, häufig 0,05 bis 0,2 und oft 0,1 bis 0,2 Gew.-%, jeweils bezogen auf die Gesamtmenge des zur Polymerisation eingesetzten wenigstens einen N-Vinyllactams I.

Durch die Mitverwendung von Redox-Coinitiatoren, beispielsweise Benzoin, Dimethylanilin sowie organisch löslicher Komplexe und Salze von Schwermetallen, wie Kupfer, Kobalt, Mangan, Nickel und Chrom oder insbesondere Eisen, können die Halbwertzeiten der genannten Peroxide, besonders der Hydroperoxide, verringert werden, so dass beispielsweise tert.-Buthylhydroperoxid in Gegenwart von 5 ppm Kupfer-IIacetylacetonat bereits bei ≤ 70 °C wirksam ist.

Bevorzugt werden gut wasserlösliche Azoinitiatoren, wie beispielsweise 2,2'-Azo-bis-(2-methylpropionamidin)dihydrochlorid eingesetzt.

Die Polymerisationsreaktion wird mit Hilfe von in Radikale zerfallende Polymerisationsinitiatoren gestartet. Es können sämtliche Initiatoren eingesetzt werden, die für die Polymerisation der N-Vinyllactame I bekannt sind. Geeignet sind beispielsweise in Radikale zerfallende Initiatoren, die bei den jeweils gewählten Temperaturen Halbwertzeiten von weniger als 3 Stunden besitzen. Falls die Polymerisation bei unterschiedlichen Temperaturen durchgeführt wird, indem man die N-Vinyllactame I zunächst bei einer niedrigeren Temperatur anpolymerisiert und anschließend bei einer deutlich höheren Temperatur auspolymerisiert, so verwendet man zweckmäßigerweise mindestens zwei unterschiedliche Initiatoren, die in dem jeweils gewählten Temperaturbereich eine ausreichende Zerfallsgeschwindigkeit haben.

Die Polymerisation wird bei Temperaturen ≤ 70 °C, oft ≥ 20 und ≤ 70 °C oder ≥ 45 und ≤ 65 °C und häufig ≥ 55 und ≤ 65 °C durchgeführt. Häufig erfolgt die Polymerisationsreaktion unter Atmosphärendruck (1 bar absolut) oder, wenn die Polymerisation in einem geschlossenen System durchgeführt wird, unter dem sich einstellenden Eigendruck. In der Regel erfolgt die Polymerisationsreaktion unter Sauerstoffausschluss, beispielsweise unter Stickstoffatmosphäre.

Die Polymerisation kann gegebenenfalls auch in Gegenwart von Molekulargewichtsreglern durchgeführt werden, um das Molekulargewicht der Polymerisate gezielt einzustellen. Geeignete Polymerisationsregler sind beispielsweise 2-Mercaptoethanole, Mercaptopropanole, Mercaptobutanole, Thioglykolsäure, N-Dodecylmercaptan, tert.-Dodecylmercaptan, Thiophenol, Mercaptopropionsäure, Allylalkohol und Acetaldehyd. Die Molekulargewichtsregler werden, bezogen auf die eingesetzten Vinyllactamen I, in einer Menge von 0 bis 10, oder 0 bis 5 Gew.-%, oder 0 bis 2 Gew.-%, eingesetzt. In der Regel werden im erfindungsgemäßen Verfahren jedoch keine Molekulargewichtsregler eingesetzt.

Das erfindungsgemäße Verfahren wird häufig in Anwesenheit von Puffersubstanzen durchgeführt, welche die Hydrolyse der N-Vinyllactame I, insbesondere bei einem pH-Wert < 6 unterdrücken sollen. Als Puffersubstanzen werden beispielsweise Natriumbicarbonat oder Natriumpyrophosphat, sowie weitere dem Fachmann geläufige Verbindungen verwendet. Bezogen auf das wässrige Reaktionsmedium beträgt deren Gehalt häufig 0,01 bis 2 Gew.-%.

Der pH-Wert des wässrigen Reaktionsmediums liegt in der Regel im Bereich von 6 bis 11, wobei jedoch ein pH-Wert ≥ 6,5 und ≤ 10 (jeweils gemessen bei 20 bis 25 °C) bevorzugt ist.

Daneben kann das wässrige Reaktionsmedium noch weitere übliche Hilfsstoffe, wie beispielsweise Biozide, Viskositätsregler oder Entschäumer enthalten.

Das erfindungsgemäße Verfahren erfolgt in der Regel dergestalt, dass zur Polymerisation ≥ 20 Gew.-%, oft ≥ 25 Gew.-% und häufig ≥ 30 Gew.-% des wenigstens einen N-Vinyllactams I, bezogen auf die Gesamtmenge der resultierenden wässrigen Polyvinyllactam-Dispersion eingesetzt werden.

Wesentlich ist, dass die Gesamtmenge des wenigstens einen N-Vinyllactams I im erfindungsgemäßen Verfahren bis zu einem Umsatz von ≥ 90 Gew.-%, oft ≥ 95 Gew.-% oder häufig ≥ 98 Gew.-% polymerisiert wird.

Das erfindungsgemäße Verfahren kann entweder nach der sogenannten Batchfahrweise unter Vorlage der Gesamtmenge des wenigstens einen N-Vinyllactams I oder nach der sogenannten Zulauffahrweise erfolgen.

Erfolgt die Polymerisation in Batchfahrweise, erfolgt die Vorlage aller Komponenten bis auf den Radikalinitiator im Polymerisationsreaktor. Anschließend wird das wässrige Polymerisationsgemisch unter Rühren auf Polymerisationstemperatur aufgeheizt und danach der Radikalinitiator diskontinuierlich oder kontinuierlich zugegeben.

In einer bevorzugten Ausführungsform wird das erfindungsgemäße Verfahren mittels Zulauffahrweise durchgeführt. Dabei werden einzelne oder alle Reaktionskomponenten ganz oder teilweise, absatzweise oder kontinuierlich, gemeinsam oder in getrennten Zuläufen dem wässrigen Reaktionsmedium zudosiert.

Vorteilhaft wird wenigstens eine Teilmenge des wenigstens einen organischen oder anorganischen Salzes und des wenigstens einen polymeren anionischen Dispergiermittels sowie gegebenenfalls eine Teilmenge des wenigstens einen Radikalinitiators und/oder des wenigstens einen N-Vinyllactams I im wässrigen Reaktionsmedium unter Rühren vorgelegt und unter Polymerisationsbedingungen die gegebenenfalls verbliebenen Restmengen des wenigstens einen organischen oder anorganischen Salzes und des wenigstens einen polymeren anionischen Dispergiermittels sowie die Gesamtmenge bzw. gegebenenfalls verbliebene Restmenge des wenigstens einen Radikalinitiators und/oder des wenigstens einen N-Vinyllactams I diskontinuierlich oder insbesondere kontinuierlich zudosiert.

Die bei der Polymerisation erhaltenen Wasser-in-Wasser-Dispersionen können im Anschluss an den Polymerisationsprozess einer physikalischen oder chemischen Nachbehandlung unterworfen werden.

Hierzu werden beispielsweise dem Polymerisationsgemisch zur Vervollständigung der Polymerisation unter Polymerisationsbedingungen zusätzlich 0,05 bis 1,5 Gew.-%, bezogen auf die Gesamtmenge des zur Polymerisation eingesetzten wenigstens einen N-Vinyllactams I, wenigstens eines der vorgenannten Radikalinitiatoren diskontinuierlich oder kontinuierlich zudosiert. Vorteilhaft wird dem Polymerisationsgemisch zur Vervollständigung der Polymerisation die Gesamtmenge des Radikalinitiators unter Polymerisationsbedingungen diskontinuierlich in einer Charge zugegeben.

Häufig wird zur Entfernung leichtflüchtiger organischer Bestandteile im Anschluss an die eigentliche Polymerisationsreaktion eine Nachbehandlung der erhaltenen Wasser-in-Wasser-Dispersion mittels Wasserdampf- und/oder Stickstoffstrippung durchgeführt. Verfahren zur Wasserdampf- und/oder Stickstoffstrippung sind dem Fachmann geläufig.

Die erhaltenen Wasser-in-Wasser-Dispersionen sind üblicherweise milchig weiß und haben bei 25 °C eine Viskosität von 5 bis 90000 mPas, oft von 10 bis 60000 mPas und oft von 15 bis 30000 mPas, jeweils gemessen nach der Brookfield-Methode, Spindel 4, 10 Umdrehungen pro Minute.

Die durch das erfindungsgemäße Verfahren zugänglichen Polyvinyllactame weisen K-Werte ≥ 120, häufig ≥ 130 oder sogar ≥ 140, gemessen nach Fikentscher (siehe oben) auf. Die gewichtsmittleren Molekulargewichte der erfindungsgemäß zugänglichen Polyvinyllactame liegen im Bereich von 1000000 bis 5000000 g/mol, häufig im Bereich von 1500000 bis 4000000 g/mol und oft im Bereich von 2000000 bis 4000000 g/mol, jeweils bestimmt mittels üblicher Verfahren der Gelpermeationschromatographie.

Die erfindungsgemäß zugänglichen wässrigen Polyvinyllactam-Dispersionen können direkt in den Handel gebracht werden. Es ist aber auch möglich, diese Dispersionen mittels oxidierenden oder reduzierenden Reagenzien, Adsorptionsverfahren, wie die Adsorption von Verunreinigung an ausgewählten Medien, beispielsweise an Aktivkohle oder mittels Ultrafiltrationsverfahren von möglicherweise störenden Nebenkomponenten zu befreien. Die erfindungsgemäß zugänglichen wässrigen Polyvinyllactam-Dispersionen lassen sich aber auch durch geeignete Trockenverfahren, wie Sprüh-, Gefrier- oder Walzentrocknung, gegebenenfalls unter Verwendung geeigneter Hilfsmittel, wie beispielsweise Sprühtrocknungshilfsmittel oder Antibackmittel, in die entsprechenden Polyvinyllactampulver überführen.

Von Bedeutung ist, dass die erfindungsgemäß zugänglichen hochmolekularen Polyvinyllactame in Form ihrer Wasser-in-Wasser-Dispersionen oder in Form ihrer Polymerpulver vorteilhaft als Komponente in Pharma- oder Kosmetikprodukten, in Klebstoffen, Wärmeträgerflüssigkeiten, in Beschichtungs-, Verdicker-, Adsorber-, Bindemittel-, Waschmittel-, Kunststoff-, Keramik-, Kühlmittel-, Tinten- oder Pigmentformulierungen sowie in Metallquenchbädern eingesetzt werden können.

Durch das erfindungsgemäße Verfahren sind hochkonzentrierte Wasser-in-Wasser-Dispersionen von hochmolekularen (K-Wert ≥ 120) Polyvinyllactamen mit guten Raum-Zeit-Ausbeuten zugänglich. Diese Dispersionen sind über viele Monate stabil, trotz ihres hohen Polyvinyllactamgehalts niedrigviskos und weisen darüber hinaus keine bis vernachlässigbar geringe Gelgehalte auf.

### Beispiele

### Analytik

Die K-Wertbestimmung nach Fikentscher erfolgte bei 25 °C mittels einer 5 gew.-%igen Lösung von Natriumchlorid in entionisiertem Wasser mit einem Gerät der Fa. Schott, Mainz (Kapillare: Mikro-Ostwald; Typ: MO-Ic). Die wässrige Polyvinyllactamdispersion und die 5 gew-%ige wässrige Natriumchloridlösung wurden dabei derart gemischt, dass die resultierende homogene Lösung einen Polyvinyllactamgehalt von 0,1 g pro 100 ml 5 gew.-%ige wässrige Natriumchloridlösung aufwies.

Der Polyvinyllactamgehalt der wässrigen Polyvinyllactamdispersion wurde bestimmt, indem eine aliquote Menge der wässrigen Polyvinyllactamdispersion in einem Trockenschrank bei 140 °C bis zur Gewichtskonstanz getrocknet wurde. Der Polyvinyllactamgehalt errechnet sich aus dem korrigiertem Trockenrückstand, bezogen auf die zur Trocknung eingesetzte aliquote Menge der wässrigen Polyvinyllactamdispersion. Unter korrigiertem Trockenrückstand wird der nach der Trocknung erhaltene Trockenrückstand, abzüglich der in der zur Trocknung eingesetzten aliquoten Menge der wässrigen Polyvinyllactamdispersion neben dem Polyvinyllactam enthaltenen Hilfsstoffen, wie Radikalinitiatormenge, Menge an polymeren anionischem Dispergiermittel, organischen oder anorganischen Salzen sowie ggf. weiteren Hilfsstoffen, verstanden.

Die Viskositätsbestimmung der erhaltenen wässrigen Polyvinyllactamdispersion erfolgte nach ISO 2555 bei 25 °C mit einem Brookfield Gerät, Model DV-II mit Spindel 4 bei einer Drehzahl von 10 Umdrehungen pro Minute.

### Beispiel 1

In einem 1,5 I-Polymerisationsreaktor mit Anker-Rührer wurden bei 20 bis 25 °C (Raumtemperatur)

| | |
|---|---|
| 330 g | entionisiertes Wasser |
| 63,4 g | Natriumsulfat (wasserfrei, Fa. Merck, Darmstadt) |
| 148 g | einer 20 gew.-%igen wässrigen Lösung eines Copolymers (aus Acrylsäure und Vinylformamid im Mengenverhältnis 9 : 1, mit anschließender Hydrolyse und Neutralisation mittels wässriger Natriumhydroxid-Lösung, einem K-Wert von 104 und einem gewichtsmittleren Molekulargewicht von 1070000 g/mol) |

vorgelegt. Anschließend wurde mit einer 5 gew.-%igen wässrigen Lösung von Schwefelsäure der pH-Wert dieser Reaktionsmischung auf 6,8 eingestellt und danach diese Reaktionsmischung unter Rühren (160 U/min) und Stickstoffatmosphäre auf 60 °C aufgeheizt. Nach Erreichen von 60 °C wurden unter Rühren und Beibehaltung der Reaktionstemperatur 10 Gew.-% der nachfolgend beschriebenen Zuläufe I und II zu der Reaktionsmischung zugegeben und 5 Minuten unter vorgenannten Bedingungen gerührt.

Danach wurden dem Reaktionsgemisch unter Rühren und Beibehaltung der Reaktionstemperatur gleichzeitig beginnend, die Restmengen der Zuläufe I und II innerhalb zwei Stunden mit gleichbleibenden Zulaufströmen zudosiert. Nach Beendigung der Zuläufe I und II wurde noch drei Stunden bei 60 °C nachpolymerisiert.

Anschließend wurde die Reaktionsmischung auf 75 °C aufgeheizt. Danach wurde diesem Polymerisationsgemisch Zulauf III auf einmal zugegeben und für weitere zwei Stunden unter Rühren bei dieser Temperatur belassen. Anschließend wurde die Polymerdispersion auf Raumtemperatur abgekühlt.

### Zulauf I:

| | |
|---|---|
| 233,4 g | N-Vinyl-2-pyrrolidon (der Fa. BASF AG, Ludwigshafen) |

### Zulauf II war eine wässrige Lösung bestehend aus:

| | |
|---|---|
| 0,35 g | 2,2'-Azo-bis-(2-methylpropionamidin)dihydrochlorid (V-50, der Fa. Wako Chemicals GmbH, Neuss) |
| 55,9 g | entionisiertes Wasser |

### Zulauf III war eine wässrige Lösung bestehend aus:

| | |
|---|---|
| 0,7 g | V-50 |
| 13 g | entionisiertes Wasser |

Der K-Wert des erhaltenen Polyvinyllactams wurde zu 141, die Viskosität der erhaltenen wässrigen Dispersion zu 10,3 Pas und der Polyvinyllactamgehalt der wässrigen Dispersion zu 27,6 Gew.-% bestimmt.

### Beispiel 2

Die Herstellung von Beispiel 2 erfolgte analog Beispiel 1, mit der Ausnahme dass folgende Rohstoffe bzw. Rohstoffmengen eingesetzt wurden.

### Vorlage:

| | |
|---|---|
| 464 g | entionisiertes Wasser |
| 75 g | Natriumsulfat |
| 106 g | einer 35,1 gew.-%igen wässrigen Lösung eines Copolymers (aus Maleinsäureanhydrid und Methylvinylether im Mengenverhältnis 1 : 1, mit anschließender vollständiger Hydrolyse der Anhydridgruppen und Neutralisation mittels wässriger Natriumhydroxid-Lösung, einem K-Wert vom 90 und einem gewichtsmittlerem Molekulargewicht von 160000 g/mol) |

### Zulauf I:

| | |
|---|---|
| 300 g | N-Vinyl-2-pyrrolidon |

### Zulauf II war eine wässrige Lösung bestehend aus:

| | |
|---|---|
| 0,45 g | V-50 |
| 44,5 g | entionisiertes Wasser |

### Zulauf III war eine wässrige Lösung bestehend aus:

| | |
|---|---|
| 0,9 g | V-50 |
| 8 g | entionisiertes Wasser |

Der K-Wert des erhaltenen Polyvinyllactams wurde zu 143, die Viskosität der erhaltenen wässrigen Dispersion zu 27,5 Pas und der Polyvinyllactamgehalt der wässrigen Dispersion zu 30,1 Gew.-% bestimmt.

### Beispiel 3

Die Herstellung von Beispiel 3 erfolgte analog Beispiel 1, mit der Ausnahme dass folgende Rohstoffe bzw. Rohstoffmengen eingesetzt wurden.

### Vorlage:

| | |
|---|---|
| 383 g | entionisiertes Wasser |
| 76,9 g | Tri-Natriumcitrat-Dihydrat (der Fa. Fluka, Deutschland) |
| 89 g | einer 37,8 gew.-%igen wässrigen Lösung einer reinen Polyacrylsäure (mit wässriger Natriumhydroxid-Lösung neutralisiert, einem K-Wert von 80 und einem gewichtsmittleren Molelulargewicht von 100000 g/mol) |

### Zulauf I:

| | |
|---|---|
| 270 g | N-Vinyl-2-pyrrolidon |

### Zulauf II war eine wässrige Lösung bestehend aus:

| | |
|---|---|
| 0,41 g | V-50 |
| 64,5 g | entionisiertes Wasser |

### Zulauf III war eine wässrige Lösung bestehend aus:

| | |
|---|---|
| 0,81 g | V-50 |
| 15 g | entionisiertes Wasser |

Der K-Wert des erhaltenen Polyvinyllactams wurde zu 138, die Viskosität der erhaltenen wässrigen Dispersion zu 7,5 Pas und der Polyvinyllactamgehalt der wässrigen Dispersion zu 30,3 Gew.-% bestimmt.

### Beispiel 4

Die Herstellung von Beispiel 4 erfolgte analog Beispiel 1, mit der Ausnahme dass folgende Rohstoffe bzw. Rohstoffmengen eingesetzt wurden.

### Vorlage:

| | |
|---|---|
| 565 g | entionisiertes Wasser |
| 115,3 g | Tri-Natriumcitrat-Dihydrat |
| 143,8 g | einer 35,1 gew.-%igen wässrigen Lösung eines Copolymers (aus Maleinsäureanhydrid und Methylvinylether im Mengenverhältnis 1 : 1, mit anschließender vollständigen Hydrolyse der Anhydridgruppen und Neutralisation mittels wässriger Natriumhydroxid-Lösung, einem K-Wert vom 90 und einem gewichtsmittlerem Molekulargewicht von 160000 g/mol) |

### Zulauf I:

| | |
|---|---|
| 405 g | N-Vinyl-2-pyrrolidon |

### Zulauf II war eine wässrige Lösung bestehend aus:

| | |
|---|---|
| 0,61 g | V-50 |
| 96,8 g | entionisiertes Wasser |

### Zulauf III war eine wässrige Lösung bestehend aus:

| | |
|---|---|
| 1,22 g | V-50 |
| 22,5 g | entionisiertes Wasser |

Der K-Wert des erhaltenen Polyvinyllactams wurde zu 144, die Viskosität der erhaltenen wässrigen Dispersion zu 16,2 Pas und der Polyvinyllactamgehalt der wässrigen Dispersion zu 31,9 Gew.-% bestimmt.

### Vergleichsbeispiel

Die Herstellung des Vergleichsbeispiels erfolgte analog Beispiel 1, mit der Ausnahme, dass kein Natriumsulfat eingesetzt wurde.

Der Versuch musste nach Zugabe von ca. 180 g N-Vinyl-2-pyrrolidon infolge der resultierenden zu hohen Viskosität abgebrochen werden.

## Patentansprüche

1. Verfahren zur Herstellung einer Wasser-in-Wasser-Dispersion von Polyvinyllactam mit einem K-Wert von ≥ 120 durch radikalisch initiierte Polymerisation wenigstens eines N-Vinyllactams der allgemeinen Formel I 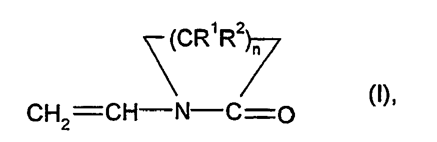 mit
R¹, R² unabhängig voneinander Wasserstoff und/oder C₁-C₈-Alkyl,
n gleich einer ganzen Zahl von 2 bis 8,
in einem wässrigen Reaktionsmedium,
**dadurch gekennzeichnet, dass** das zur Polymerisation eingesetzte wenigstens eine N-Vinyllactam I zu wenigstens 50 Gew.-% aus N-Vinyl-2-pyrrolidon (R¹ und R² gleich Wasserstoff, n gleich 3) besteht, die Polymerisationstemperatur ≤ 70 °C beträgt und die radikalisch initiierte Polymerisation des wenigstens einen N-Vinyllactams I in Gegenwart von
a) 1 bis 100 Gew.-% der Sättigungsmenge im wässrigen Reaktionsmedium wenigstens eines organischen oder anorganischen Salzes,
b) 0,1 bis 30 Gew.-% wenigstens eines polymeren anionischen Dispergiermittels, bezogen auf die Gesamtmenge des zur Polymerisation eingesetzten wenigstens einen N-Vinyllactams I, sowie
c) 0,01 bis 0,25 Gew.-% wenigstens eines Radikalinitiators, bezogen auf die Gesamtmenge des zur Polymerisation eingesetzten wenigstens einen N-Vinyllactams I
erfolgt, und dabei die Reaktionsbedingungen so gewählt werden, dass während der Polymerisationsreaktion wenigstens eine Teilmenge des wenigstens einen N-Vinyllactams I und des daraus durch Polymerisation gebildeten Polyvinyllactams im wässrigen Reaktionsmedium als separate Phase vorliegen.

2. Verfahren nach Anspruch 1, **dadurch gekennzeichnet, dass** zur Polymerisation ≥ 20 Gew.-% des wenigstens einen N-Vinyllactams I, bezogen auf die Gesamtmenge der resultierenden wässrigen Polyvinyllactam-Dispersion, eingesetzt werden.

3. Verfahren nach einem der Ansprüche 1 oder 2, **dadurch gekennzeichnet, dass** die Polymerisation nach der Zulauffahrweise erfolgt.

4. Verfahren nach Anspruch 3, **dadurch gekennzeichnet, dass** wenigstens eine Teilmenge des wenigstens einen organischen oder anorganischen Salzes und des wenigstens einen polymeren anionischen Dispergiermittels sowie gegebenenfalls eine Teilmenge des wenigstens einen Radikalinitiators und/oder des wenigstens einen N-Vinyllactams I im wässrigen Reaktionsmedium vorgelegt und unter Polymerisationsbedingungen die gegebenenfalls verbliebenen Restmengen des wenigstens einen organischen oder anorganischen Salzes und des wenigstens einen polymeren anionischen Dispergiermittels sowie die Gesamtmenge bzw. gegebenenfalls verbliebene Restmenge des wenigstens einen Radikalinitiators und/oder des wenigstens einen N-Vinyllactams I kontinuierlich zudosiert werden.

5. Verfahren nach einem der Ansprüche 1 bis 4, **dadurch gekennzeichnet, dass** die Gesamtmenge des wenigstens einen N-Vinyllactams I bis zu einem Umsatz von ≥ 90 Gew.-% polymerisiert wird.

6. Verfahren nach Anspruch 5, **dadurch gekennzeichnet, dass** dem Polymerisationsgemisch zur Vervollständigung der Polymerisation unter Polymerisationsbedingungen zusätzlich 0,05 bis 1,5 Gew.-%, bezogen auf die Gesamtmenge des zur Polymerisation eingesetzten wenigstens einen N-Vinyllactams I, wenigstens eines Radikalinitiators zudosiert werden.

7. Verfahren nach einem der Ansprüche 1 bis 6, **dadurch gekennzeichnet, dass** das zur Polymerisation eingesetzte wenigstens eine N-Vinyllactam I ausschließlich N-Vinyl-2-pyrrolidon ist.

8. Verfahren nach einem der Ansprüche 1 bis 7, **dadurch gekennzeichnet, dass** als wenigstens ein polymeres anionisches Dispergiermittel Homo- oder Copolymerisate ethylenisch ungesättigter Carbon- oder Sulfonsäuren sowie deren entsprechenden Salze eingesetzt werden.

9. Verfahren nach einem der Ansprüche 1 bis 8, **dadurch gekennzeichnet, dass** als wenigstens ein Salz das Salz einer organischen C₁- bis C₁₅-Carbonsäure eingesetzt wird.

10. Wässrige Polyvinyllactam-Dispersion erhältlich nach einem Verfahren gemäß einem der Ansprüche 1 bis 9.

11. Verwendung einer wässrigen Polyvinyllactam-Dispersion gemäß Anspruch 10 als Komponente in Pharma- oder Kosmetikprodukten, in Klebstoffen, Wärmeträgerflüssigkeiten, in Beschichtungs-, Verdicker-, Adsorber-, Bindemittel-, Waschmittel-, Kunststoff-, Keramik-, Kühlmittel-, Tinten- oder Pigmentformulierungen sowie in Metallquenchbädern.

12. Pharma- oder Kosmetikprodukte, Klebstoffe, Wärmeträgerflüssigkeiten, Beschichtungs-, Verdicker-, Adsorber-, Bindemittel-, Waschmittel-, Kunststoff-, Keramik-, Kühlmittel-, Tinten-, oder Pigmentformulierungen sowie Metallquenchbäder, enthaltend wenigstens eine wässrige Dispersion von Polyvinyllactam mit einem K-Wert ≥ 120 und einem Polyvinyllactamgehalt von ≥ 20 Gew.-%, bezogen auf die Gesamtmenge der wässrigen Polyvinyllactam-Dispersion.

## Claims

1. A process for preparing a water-in-water dispersion of polyvinyllactam having a K value of ≥ 120 by free-radically initiated polymerization of at least one N-vinyllactam of general formula I 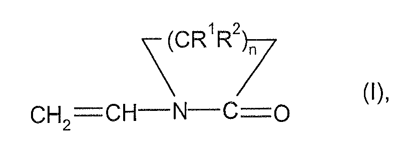 where
R¹, R² independently of one another are hydrogen and/or C₁-C₈ alkyl, and
n is an integer from 2 to 8,
in an aqueous reaction medium,
wherein said at least one N-vinyllactam I used for the polymerization is composed of at least 50% by weight of N-vinyl-2-pyrrolidone (R¹ and R² as hydrogen, n as 3), the polymerization temperature is ≤ 70°C und the free-radically initiated polymerization of said at least one N-vinyllactam I takes place in the presence of
a) from 1% to 100% by weight, based on the saturation amount in the aqueous reaction medium, of at least one organic or inorganic salt,
b) from 0.1 % to 30% by weight of at least one polymeric anionic dispersant, based on the total amount of said at least one N-vinyllactam I used for the polymerization, and
c) from 0.01 % to 0.25% by weight of at least one free-radical initiator, based on the total amount of said at least one N-vinyllactam I used for the polymerization,
and the reaction conditions are chosen so that during the polymerization reaction at least a portion of said at least one N-vinyllactam I and of the polyvinyllactam formed therefrom by polymerization are present in the form of a separate phase in the aqueous reaction medium.

2. The process according to claim 1, wherein the polymerization is carried out using ≥ 20% by weight of said at least one N-vinyllactam I, based on the total amount of the resulting aqueous polyvinyllactam dispersion.

3. The process according to either of claims 1 and 2, wherein the polymerization takes place by the feed technique.

4. The process according to claim 3, wherein at least one portion of said at least one organic or inorganic salt and of said at least one polymeric anionic dispersant and if appropriate a portion of said at least one free-radical initiator and/or of said at least one N-vinyllactam I are introduced as an initial charge in the aqueous reaction medium and under polymerization conditions the remainders if appropriate of said at least one organic or inorganic salt and of said at least one polymeric anionic dispersant and also the entirety or remainder if appropriate of said at least one free-radical initiator and/or of said at least one N-vinyllactam I are metered in continuously.

5. The process according to any one of claims 1 to 4, wherein the entirety of said at least one N-vinyllactam I is polymerized to a conversion of ≥ 90% by weight.

6. The process according to claim 5, wherein the polymerization is completed by metering additionally from 0.05% to 1.5% by weight, based on the total amount of said at least one N-vinyllactam I used for the polymerization, of at least one free-radical initiator into the polymerization mixture under polymerization conditions.

7. The process according to any one of claims 1 to 6, wherein said at least one N-vinyllactam I used for the polymerization is exclusively N-vinyl-2-pyrrolidone.

8. The process according to any one of claims 1 to 7, wherein as said at least one polymeric anionic dispersant homopolymers or copolymers of ethylenically unsaturated carboxylic or sulfonic acids and also their corresponding salts are used.

9. The process according to any one of claims 1 to 8, wherein as said at least one salt the salt of an organic C₁ to C₁₅ carboxylic acid is used.

10. An aqueous polyvinyllactam dispersion obtainable by a process according to any one of claims 1 to 9.

11. The use of an aqueous polyvinyllactam dispersion according to claim 10 as a component in drug or cosmetic products, in adhesives, heat transfer fluids, in coating, thickener, adsorber, binder, laundry detergent, plastics, ceramics, refrigerant, ink or pigment formulations or in metal quenching baths.

12. A drug or cosmetic product, adhesive, heat transfer fluid, coating, thickener, adsorber, binder, laundry detergent, plastics, ceramics, refrigerant, ink or pigment formulation or metal quenching bath comprising at least one aqueous dispersion of polyvinyllactam having a K value ≥ 120 and a polyvinyllactam content of ≥ 20% by weight, based on the total amount of the aqueous polyvinyllactam dispersion.

## Revendications

1. Procédé pour la préparation d'une dispersion eau-dans-l'eau de polyvinyllactames ayant une valeur K de ≥ 120 par polymérisation initialisée par la voie radicalaire d'au moins un N-vinyllactame répondant à la formule générale I 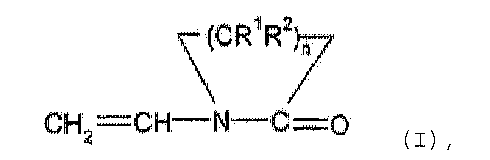 avec
R¹, R² représentant indépendamment l'un de l'autre un hydrogène et/ou un groupe alkyle en C₁-C₈,
n valant un nombre entier de 2 à 8,
dans un milieu réactionnel aqueux,
**caractérisé en ce que** le au moins un N-vinyllactame I utilisé pour la polymérisation est au moins constitué de 50 % en poids de N-vinyl-2-pyrrolidone (R¹ et R² représentant un hydrogène, n valant 3), **en ce que** la température de polymérisation est de ≤ 70°C et la polymérisation initialisée par la voie radicalaire du au moins un N-vinyllactame I est effectuée en présence de :
a) 1 à 100 % en poids de la quantité de saturation dans un milieu réactionnel aqueux d' au moins un sel organique ou inorganique,
b) 0,1 à 30 % en poids d'au moins un agent de dispersion anionique polymère sur la base de la quantité totale du au moins un N-vinyllactame I utilisé pour la polymérisation, et
c) 0,01 à 0,25 % en poids d'au moins un initiateur radicalaire sur la base de la quantité totale du au moins un N-vinyllactame I utilisé pour la polymérisation,
et les conditions de réaction étant ainsi choisies de telle sorte que pendant la réaction de polymérisation au moins une quantité partielle du au moins un N-vinyllactame I et du polyvinyllactame formé à partir de celui-ci par polymérisation sont présentes sous la forme de phases séparée dans le milieu réactionnel aqueux.

2. Procédé selon la revendication 1, **caractérisé en ce que** ≥ 20 % en poids du au moins un N-vinyllactame I, sur la base de la quantité totale de la dispersion de polyvinyllactame aqueuse résultante, sont utilisés pour la polymérisation.

3. Procédé selon l'une quelconque des revendications 1 ou 2, **caractérisé en ce que** la polymérisation est effectuée en mode continu.

4. Procédé selon la revendication 3, **caractérisé en ce qu'**au moins une quantité partielle du au moins un sel organique ou inorganique et du au moins un agent de dispersion anionique polymère, de même, facultativement, qu'une quantité partielle du au moins un initiateur radicalaire et/ou du au moins un N-vinyllactame I sont introduits dans le milieu réactionnel aqueux et **en ce que**, dans les conditions de polymérisation, les quantités résiduelles éventuellement présentes du au moins un sel organique ou inorganique et du au moins un agent de dispersion anionique polymère, de même que la quantité totale ou la quantité résiduelle éventuellement présente du au moins un initiateur radicalaire et/ou du au moins un N-vinyllactame I sont dosées de manière continue.

5. Procédé selon l'une des revendications 1 à 4, **caractérisé en ce que** la quantité totale du au moins un N-vinyllactame I est polymérisée à un rendement de ≥ 90 % en poids.

6. Procédé selon la revendication 5, **caractérisé en ce qu'**une quantité additionnelle de 0,05 à 1,5 % en poids, sur la base de la quantité totale du au moins un N-vinyllactame I utilisé pour la polymérisation, est ajoutée en au mélange de polymérisation jusqu'au terme de la polymérisation dans les conditions de polymérisation.

7. Procédé selon quantité mesurée l'une quelconque des revendications 1 à 6, **caractérisé en ce** le au moins un N-vinyllactame I utilisé pour la polymérisation est exclusivement la N-vinyl-2-pyrrolidone.

8. Procédé selon l'une quelconque des revendications 1 à 7, **caractérisé en ce que** des acides carboxyliques ou sulfoniques d'homo- ou copolymérisats éthyléniquement insaturés et leurs sels correspondants sont utilisés comme au moins un agent de dispersion anionique polymère.

9. Procédé selon l'une quelconque des revendications 1 à 8, **caractérisé en ce que**, comme au moins un sel, le sel d'un acide carboxylique en C₁ à C₁₅ organique est utilisé.

10. Dispersion de polyvinyllactame aqueuse qui peut être obtenue par le procédé selon l'une quelconque des revendications 1 à 9.

11. Utilisation d'une dispersion de polyvinyllactame aqueuse selon la revendication 10 comme composant dans des produits pharmaceutiques ou cosmétiques, dans des adhésifs, liquides caloporteurs, dans des formulations de revêtement, d'agents épaississants, d'adsorbants, de liants, de détergents, de matières plastiques, de céramiques, d'agents de refroidissement, d'encres ou de pigments, de même que dans des bains de trempe métalliques.

12. Produits pharmaceutiques ou cosmétiques, adhésifs, liquides caloporteurs, formulations de revêtement, agents épaississants, adsorbants, liants, détergents, matières plastiques, céramiques, agents de refroidissement, encres ou pigments, de même que des bains de trempe métalliques contenant au moins une dispersion aqueuse de polyvinyllactame ayant une valeur K de ≥ 120 et une teneur en polyvinyllactame de ≥ 20 % en poids sur la base de la quantité totale de la dispersion de polyvinyllactame aqueuse.
